(19) Europäisches Patentamt
European Patent Office
Office européen des brevets

(11) **EP 3 176 951 B1**

(12) **EUROPEAN PATENT SPECIFICATION**

(45) Date of publication and mention
of the grant of the patent:
**22.09.2021 Bulletin 2021/38**

(51) Int Cl.:
***H04B 1/10*** *(2006.01)*  ***H04B 1/12*** *(2006.01)*

(21) Application number: **15845875.2**

(22) Date of filing: **30.04.2015**

(86) International application number:
**PCT/CN2015/078044**

(87) International publication number:
**WO 2016/050062 (07.04.2016 Gazette 2016/14)**

(54) **PASSIVE INTER-MODULATION (PIM) INTERFERENCE CANCELLATION METHOD FOR RADIO FREQUENCY MODULE AND RELEVANT APPARATUS**

VERFAHREN ZUR UNTERDRÜCKUNG DER INTERFERENZ VON PASSIVER INTERMODULATION (PIM) FÜR HOCHFREQUENZMODUL UND ZUGEHÖRIGE VORRICHTUNG

PROCÉDÉ D'ANNULATION DE BROUILLAGE D'INTERMODULATION PASSIVE (PIM) POUR UN MODULE RADIOFRÉQUENCE ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014 CN 201410522019**

(43) Date of publication of application:
**07.06.2017 Bulletin 2017/23**

(73) Proprietor: **Huawei Technologies Co., Ltd.
Longgang District
Shenzhen, Guangdong 518129 (CN)**

(72) Inventors:
• **WANG, Lei
Shenzhen
Guangdong 518129 (CN)**
• **SERGEY, Monin
Shenzhen
Guangdong 518129 (CN)**
• **DMITRIY, Kuryshev
Shenzhen
Guangdong 518129 (CN)**

• **SERGEY, Buzykanov
Shenzhen
Guangdong 518129 (CN)**
• **CHEN, Yingying
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(56) References cited:
**WO-A1-2014/012585     WO-A1-2014/078455
CN-A- 103 986 482     CN-A- 104 283 580
GB-A- 2 508 443     GB-A- 2 508 443
GB-A- 2 511 865     US-A1- 2012 295 558
US-A1- 2014 036 736**

• **None**

EP 3 176 951 B1

**Description**

## TECHNICAL FIELD

The present invention relates to the field of communications technologies, and specifically, to a passive inter-modulation PIM interference cancellation method and a related apparatus for a radio frequency module.

## BACKGROUND

In a wireless communications system, as a growing quantity of voice and data information needs to be transmitted in fixed bandwidth, passive inter-modulation (Passive Inter-Modulation, PIM) becomes a key factor that limits a system capacity. Passive inter-modulation in the wireless communications system is caused by non-linear characteristics of various passive devices (such as a duplexer, an antenna, a feeder, or a radio frequency cable connector) in a transmit system. In a high-power multi-channel system, a conventional passive linear component causes a relatively strong non-linear effect due to high power, and generates a group of new frequencies (PIM 3, PIM 5, ...), that is, generates stray signals - passive inter-modulation signals. If these stray PIM signals fall into a receive frequency band and power exceeds a minimum amplitude of a wanted signal of the system, sensitivity of a receiver is reduced, affecting an uplink throughput and a cell coverage area of a radio frequency module, and then causing a reduction in a system capacity of the wireless communications system.

As bandwidth of a base station becomes wider, a problem that a PIM component of a transmit signal is located at a frequency of a receive carrier becomes severer. A PIM level of a radio frequency passive device is related to a manufacturing process, material and structural design, and an installation method and is difficult to control regularly. In addition, a good PIM level has a problem in timeliness. After a passive device (such as a duplexer or an antenna) is delivered from factory, a PIM indicator gradually worsens due to a factor such as a slight shape change of an internal structure, expansion and contraction, or air oxidation on a surface. Therefore, a conventional method of improving a manufacturing process and standardizing an installation method cannot ensure that PIM interference to receiving of a passive device is resolved in an engineering manner with limited costs. WO2014078455 A1 describes a radio apparatus that estimates and cancels PIM. US2014036736 A1 relates to the compensation of PIM in a receiver.

## SUMMARY

Embodiments of the present invention provide a PIM interference cancellation method and a related apparatus for a radio frequency module, so as to cancel a PIM component of the radio frequency module to some extent and reduce PIM interference to receiving performance of the radio frequency module. The invention is defined in the claims.

The following technical solution is used in the embodiments of the present invention: A cancellation signal is generated according to a digital transmit signal of a radio frequency module, and the cancellation signal is superimposed reversely on a receive channel of the radio frequency module to cancel a PIM component of a receive signal. The following technical effects are achieved:

A PIM component is canceled by using a cancellation signal generated according to a digital transmit signal, and therefore, a real-time tracking characteristic is available, interference of the PIM component in the radio frequency module can be better canceled, and a PIM control level is relatively high;
the cancellation is implemented on a digital side of the radio frequency module, and therefore, an architecture is flexible and an integration level is high; and
a problem that cannot be resolved by using a conventional method such as improving a manufacturing process or standardizing an installation method is overcome, and PIM interference to receiving of a passive device in the radio frequency module is resolved in an engineering manner.

## BRIEF DESCRIPTION OF DRAWINGS

To describe the technical solutions in the embodiments of the present invention more clearly, the following briefly describes the accompanying drawings required for describing the embodiments and the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a radio frequency module in the prior art;
FIG. 2 is a flowchart of a PIM interference cancellation method for a radio frequency module according to an embodiment of the present invention;

FIG. 3 is a schematic circuit principle diagram of a radio frequency module according to an embodiment of the present invention;

FIG. 4 is a schematic diagram of a logical structure of a radio frequency module according to an embodiment of the present invention;

FIG. 5 is a specific schematic diagram of a calculation subunit according to an embodiment of the present invention; and

FIG. 6 is another specific schematic diagram of a calculation subunit according to an embodiment of the present invention.

## DESCRIPTION OF EMBODIMENTS

Embodiments of the present invention provide a PIM interference cancellation method and a related apparatus for a radio frequency module, so as to cancel a PIM component of the radio frequency module to some extent and reduce PIM interference to receiving performance of the radio frequency module.

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solution of the present invention is applied to a wireless communications system of a frequency division duplex (Frequency Division Duplexing, FDD) standard, such as FDD-LTE (Long Term Evolution, Long Term Evolution), UMTS (Universal Mobile Telecommunications System, Universal Mobile Telecommunications System), or GSM (Global System for Mobile Communication, Global System for Mobile Communications), or a multimode communications system of any combination of the foregoing standards. Specifically, the technical solution of the present invention is applied to a base station system of a wireless communications system of an FDD standard and is implemented on a radio frequency module of the base station system.

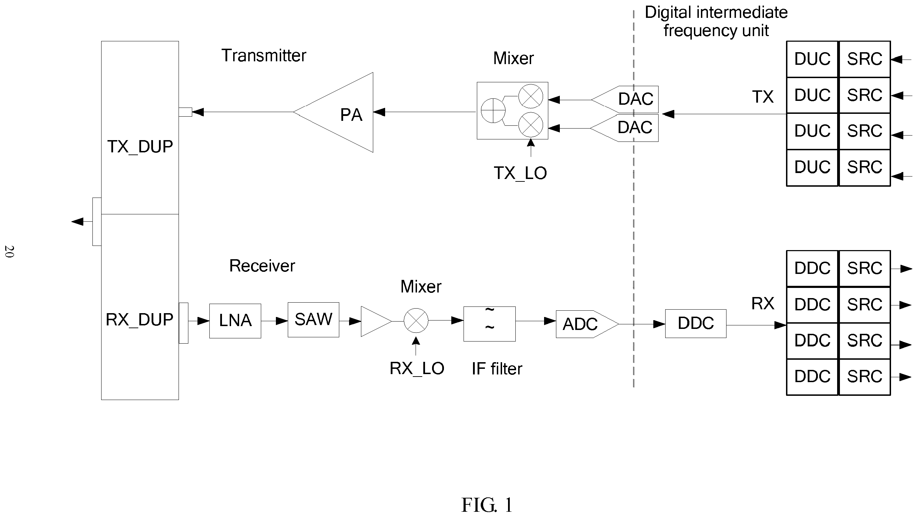

Referring to FIG. 1, FIG. 1 is a schematic diagram of a radio frequency module in the prior art. The radio frequency module includes a receiver (RX), a transmitter (TX), a duplexer (Duplexer, DUP), and the like. The duplexer is used to separate a transmit signal from a receive signal to ensure that both the receiver and the transmitter can work properly at the same time. The duplexer includes two groups of band-stop filters of different frequencies, preventing a transmit signal of the transmitter from being transmitted to the receiver. The duplexer is connected to a feeder system (not shown in the figure) and sends or receives a signal by using the feeder system.

As shown in FIG. 1, the transmitter part includes: a power amplifier (Power Amplifier, PA for short) connected to a transmit part of the duplexer (TX_DUP), a mixer (Mixer) connected to the power amplifier, a digital-to-analog converter (Digital to analog converter, DAC) connected to the mixer, and the like. The DAC is connected to a modulator of a base-band signal processing unit and is used to convert a digital transmit signal sent from the base-band signal processing unit into an analog transmit signal. The mixer is used to mix the analog transmit signal and a local-frequency signal (Lo) of a higher frequency into a high-frequency analog transmit signal. The power amplifier is used to amplify power of the analog transmit signal. Then, an analog transmit signal after power amplification is transmitted using the duplexer and the feeder system. In this specification, a channel that is of the transmitter of the radio frequency module and used to process the transmit signal is referred to as a transmit channel.

As shown in FIG. 1, the receiver part includes: a low noise amplifier (Low Noise Amplifier, LNA) connected to a receive part of the duplexer (RX_DUP), a surface acoustic wave (surface acoustic wave, SAW) filter connected to the LNA, an amplifier connected to the SAW, a mixer connected to the amplifier, an intermediate filter (IF) connected to the mixer, an analog to digital converter (Analog to digital converter, ADC) connected to the IF filter, a digital down converter (Digital Down Converter, DDC) connected to the ADC, and the like. The DDC is connected to a demodulator of the base-band signal processing unit and sends, to the base-band signal processing unit, a digital receive signal after ADC conversion and DDC down conversion. In this specification, a channel that is of the receiver of the radio frequency module and used to process the receive signal is referred to as a receive channel.

Referring to FIG. 1, a digital part of the radio frequency module, including a digital part of the transmitter and a digital part of the receiver, specifically as shown in the part on the right of the dashed line in FIG. 1, is generally referred to as a digital intermediate frequency unit and integrated into a digital intermediate frequency chip. The technical solution according to the embodiments of the present invention may be specifically implemented in a digital intermediate frequency unit of a radio frequency module. It should be noted that a structure of the radio frequency module shown in FIG. 1 is merely an example for ease of understanding and is not used as a limitation to the present invention. In some other embodiments, the radio frequency module may further use another structure.

The following describes the embodiments of the present invention in detail by using specific embodiments.

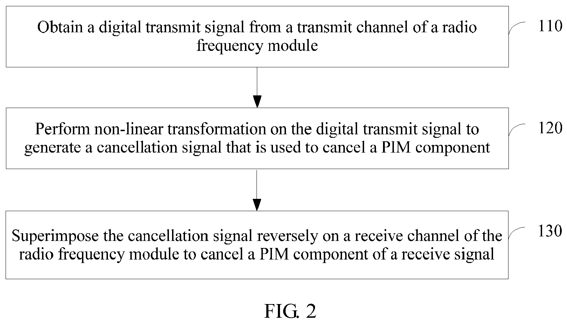

Referring to FIG. 2, an embodiment of the present invention provides a passive inter-modulation (PIM) interference cancellation method for a radio frequency module. The method may include the following steps.

110. Obtain a digital transmit signal from a transmit channel of the radio frequency module.

The present invention provides a more reliable and effective anti-PIM interference method for a radio frequency module to resolve a passive inter-modulation problem of the radio frequency module, and in particular, a passive inter-modulation problem of a feeder system of the radio frequency module. In the method, a digital intermediate frequency unit of the radio frequency module models a PIM component falling into a receive channel, and calculates and outputs a cancellation signal to cancel interference of the PIM component to receiving performance of the radio frequency module.

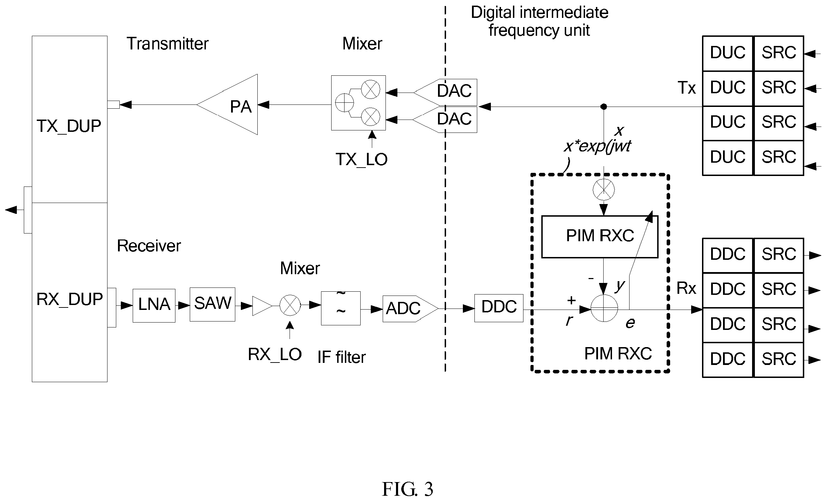

Referring to FIG. 3, a PIM interference cancellation apparatus added to a digital intermediate frequency unit may implement the method in this embodiment of the present invention. The apparatus may obtain a digital transmit signal from a transmit channel of the digital intermediate frequency unit of the radio frequency module, and subsequently generate, based on the obtained digital transmit signal, a cancellation signal that is used to cancel a PIM component. The PIM interference cancellation apparatus may be a non-linear memory system and is denoted by PIM RXC (Receiver Cancellation, receiver cancellation) in FIG. 3.

120. Perform non-linear transformation on the digital transmit signal to generate a cancellation signal that is used to cancel a PIM component.

In this embodiment of the present invention, the PIM interference cancellation apparatus performs non-linear transformation on the obtained digital transmit signal to generate a signal as the cancellation signal. The signal has a same size as and is in a reverse direction with an actual PIM component. In some embodiments of the present invention, the step may specifically include the following steps.

a. Generate a non-linear base of the digital transmit signal. The so-called non-linear base is a base of a group of linear spaces that are formed after a group of non-linear mathematical transformation like x*f(|x|, t) is performed on the digital transmit signal. The so-called base is a group of vectors and meets the following two conditions: 1. This group of vectors is linearly independent. 2. Any vector in vector space can be linearly represented by using this group of vectors. In addition, x denotes a transmit signal, f is a function related to the transmit signal, t denotes time, and f is a function related to x and t.

b. Resolve a non-linear term coefficient according to a current cancellation error. In this embodiment of the present invention, the non-linear term coefficient is resolved by detecting, in real time, an after-cancellation error of a cancellation signal of a previous moment or previous multiple moments. The so-called non-linear term coefficient is named because the digital transmit signal is mapped to an output signal after non-linear base transformation and linear transformation sequentially. In the process, a linear transformation coefficient represents a weight of each non-linear term in terms of impact on a result, and therefore is referred to as a non-linear term coefficient.

c. Generate the cancellation signal according to the digital transmit signal, the non-linear base, and the non-linear term coefficient, for example, by multiplying and summing up the foregoing values.

Specifically, a non-linear memory model may be established for a PIM component by using the following formulas, so as to calculate the cancellation signal that is used to cancel the PIM component:

$$y(k) = \sum CH_{n,p,q}(k) * x(k-p) * NL_n(|x(k-q)|),$$

$$CH_{n,p,q}(k+1) = CH_{n,p,q}(k) + mu * (e \otimes LPF) * [conj(x(k-p)) * NL_n(|x(k-q)|) \otimes LPF],$$

where x( ) denotes the digital transmit signal, y( ) denotes the cancellation signal, k denotes time, p and q denote two delays, n is used to identify different non-linear bases (different non-linear bases have different non-linear term coefficients), $CH_{n,p,q}($ ) denotes the non-linear term coefficient, $x(k-p)*NL_n(|x(k-q)|)$ denotes the non-linear base, and $NL_n($ ) is a function related to the transmit signal x( ), all x( ), y( ), $CH_{n,p,q}($ ), and $NL_n($ ) are functions of the time k, mu denotes a step factor, LPF denotes a band-limited filter coefficient, $\otimes$ denotes convolution, and conj denotes conjugation.

130. Superimpose the cancellation signal reversely on a receive channel of the radio frequency module to cancel a PIM component of a receive signal.

As shown in FIG. 3, in this embodiment of the present invention, the cancellation signal y(k) outputted by the PIM interference cancellation apparatus is superimposed reversely on the receive channel of the radio frequency module, so as to cancel a PIM component mixed in the receive signal r(k). The receive signal may be denoted by e(k)=r(k)-y(k) after cancellation processing. Specifically, an output end of the PIM interference cancellation apparatus is located between a digital down converter (DCC) and a demodulator. The receive signal e(k) after cancellation processing is sent to the demodulator or a base-band signal processing unit for processing.

In the above, this embodiment of the present invention discloses a PIM interference cancellation method for a radio frequency module. The method is applied to a wireless communications system of an FDD standard and specifically, may be implemented in a digital intermediate frequency unit of the radio frequency module in a base station system. In the method, on a side of the digital intermediate frequency unit, a non-linear memory system PIM RXC generates, by using a digital transmit signal, a cancellation signal component that has a same size as and is in a reverse direction with an actual PIM component, and superimposes the cancellation signal component reversely on a receive channel to cancel the PIM component. In the method, the PIM RXC system is trained in real time by using the foregoing formula. This can ensure a tracking characteristic of the system.

In the method of this embodiment of the present invention, to ensure that good correction performance is obtained in a specific frequency band, an adaptive resolution processing method and a real-time resolution unit that meet an optimal narrowband (band-limited) criterion is designed for a non-linear memory model, so that a non-linear term coefficient for the model can be rapidly resolved in a scenario in which a characteristic (such as temperature or structural expansion and contraction change) of a radio frequency channel and a non-linear module is drifted, and performance of tracking an external characteristic is maintained. In addition, the optimal narrowband criterion can suppress signal energy interference of another frequency band that exists in space and ensure resolution stability and reliability.

It can be learned from the above that the following technical solution is used in this embodiment of the present invention: A cancellation signal is generated according to a digital transmit signal of a radio frequency module, and the cancellation signal is superimposed reversely on a receive channel of the radio frequency module to cancel a PIM component mixed into a receive signal. The following technical effects are achieved:

A PIM component is canceled by using a cancellation signal generated according to a digital transmit signal, and therefore, a real-time tracking characteristic is available, interference of the PIM component in the radio frequency module can be better canceled, and a PIM control level is relatively high;

cancellation is implemented on a digital side of the radio frequency module, and therefore, an architecture is flexible and an integration level is high; and

a problem that cannot be resolved by using a conventional method such as improving a manufacturing process or standardizing an installation method is overcome, and PIM interference to receiving of a passive device in the radio frequency module is resolved in an engineering manner.

To better implement the foregoing solution of the embodiments of the present invention, the following further provides a related apparatus that cooperates to implement the foregoing solution.

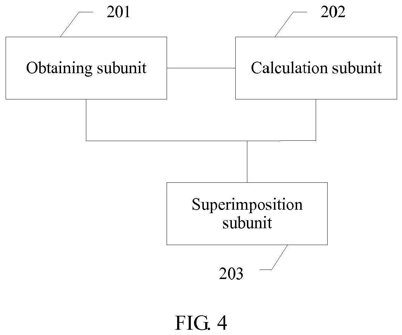

Referring to FIG. 4, an embodiment of the present invention provides a digital intermediate frequency unit of a radio frequency module. The digital intermediate frequency unit may include:

an obtaining subunit 201, configured to obtain a digital transmit signal from a transmit channel of the radio frequency module;

a calculation subunit 202, configured to perform non-linear transformation on the digital transmit signal to generate a cancellation signal that is used to cancel a PIM component; and

a superimposition subunit 203, configured to superimpose the cancellation signal reversely on a receive channel of the radio frequency module to cancel a PIM component of a receive signal.

In some embodiments of the present invention, the calculation subunit 202 may be specifically configured to generate a non-linear base of the digital transmit signal, resolve a non-linear term coefficient according to a current cancellation error, and generate the cancellation signal by multiplying and summing up the digital transmit signal, the non-linear base, and the non-linear term coefficient.

Further, the calculation subunit 202 may be specifically configured to calculate, according to the following formulas, a cancellation signal y(k) that is used to cancel a PIM component:

$$y(k) = \sum CH_{n,p,q}(k) * x(k-p) * NL_n(|x(k-q)|),$$

$$CH_{n,p,q}(k+1) = CH_{n,p,q}(k) + mu * (e \otimes LPF) * [conj(x(k-p)) * NL_n(|x(k-q)|) \otimes LPF],$$

where x( ) denotes the digital transmit signal, y( ) denotes the cancellation signal, k denotes time, p and q denote two delays, n is used to identify different non-linear bases, $CH_{n,p,q}$( ) denotes the non-linear term coefficient, $NL_n$( ) is a function related to the transmit signal x( ), x(k-p)∗$NL_n$(|x(k-q)|) denotes the non-linear base, all x( ), y( ), $CH_{n,p,q}$( ), and $NL_n$( ) are functions of the time k, mu denotes a step factor, LPF denotes a band-limited filter coefficient, ⊗ denotes convolution, and conj denotes conjugation.

In some embodiments of the present invention, the superimposition subunit 203 may be specifically configured to superimpose the cancellation signal y(k) reversely on the receive channel of the radio frequency module, so that a receive signal r(k) on the receive channel becomes e(k)=r(k)-y(k) after cancellation processing.

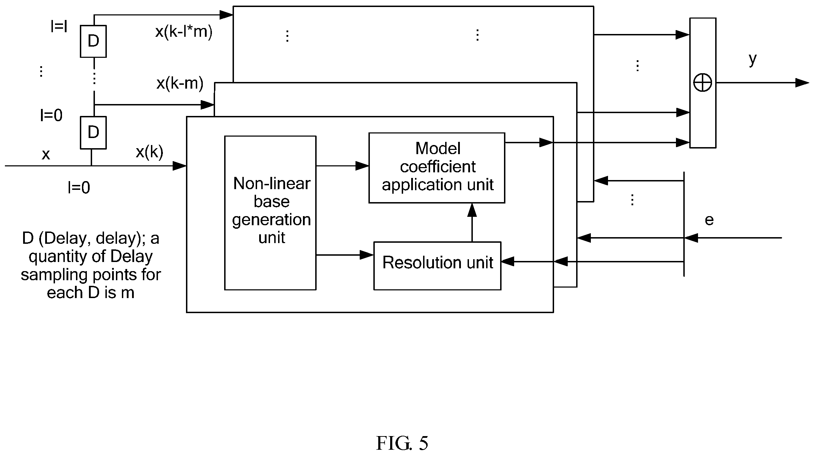

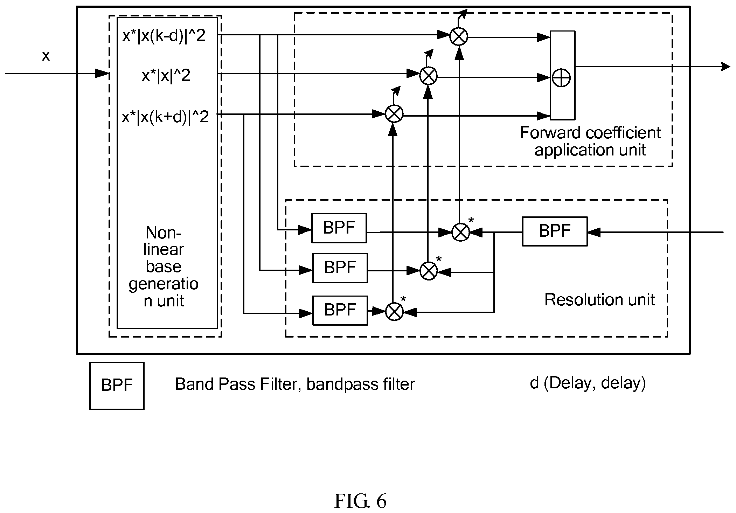

Referring to FIG. 5 and FIG. 6, the calculation subunit may specifically include:

a non-linear base generation unit, an application unit, and a resolution unit.

The non-linear base generation unit is configured to generate a non-linear base of the digital transmit signal.

The resolution unit is configured to resolve a non-linear term coefficient.

The application unit is configured to generate a cancellation signal according to a digital input signal, the non-linear base, and the non-linear term coefficient.

The application unit is also referred to as a forward coefficient application unit, and may specifically include multiple model coefficient application units. The multiple model coefficient application units are configured to process signals of different delays. Output results of the multiple model coefficient application units are summed up to obtain the required cancellation signal.

In the above, the application unit is configured to generate a cancellation signal; and the resolution unit is configured to adjust a non-linear term coefficient according to a current cancellation error, so as to implement an adaptation process. In the resolution unit, a narrowband-pass filter (that is, LPF, a band-limited filter) is designed particularly. The narrowband-pass filter has three advantages. First, after the narrowband-pass filter is added, an optimal criterion of a non-linear system changes. A passband of the narrowband-pass filter is equivalent to weighting a convergence error of an interested frequency band with a high weight to improve modeling precision of an interested receive frequency band. Second, a stopband of the narrowband-pass filter is equivalent to weighting a convergence error outside an interested frequency band with a low weight. This can control drift and divergence of out-of-band energy in a long-term iteration process in a frequency domain response of a modeling coefficient. Third, the band-limited filter can further suppress signal energy of another frequency band that exists in space, reduce random impact of the signal energy on resolution, and improve stability and reliability. The passband of the filter is fully overlapped with the receive frequency band, and may be dynamically generated and configured according to a location of a receive carrier by using on-board bottom-layer software of the radio frequency module.

It can be learned from the above that the following technical solution is used in this embodiment of the present invention: A cancellation signal is generated according to a digital transmit signal of a radio frequency module, and the cancellation signal is superimposed reversely on a receive channel of the radio frequency module to cancel a PIM component mixed into a receive signal. The following technical effects are achieved:

A PIM component is canceled by using a cancellation signal generated according to a digital transmit signal, and therefore, a real-time tracking characteristic is available, interference of the PIM component in the radio frequency module can be better canceled, and a PIM control level is relatively high;

cancellation is implemented on a digital side of the radio frequency module, and therefore, an architecture is flexible and an integration level is high; and

a problem that cannot be resolved by using a conventional method such as improving a manufacturing process or standardizing an installation method is overcome, and PIM interference to receiving of a passive device in the radio frequency module is resolved in an engineering manner.

An embodiment of the present invention further provides a radio frequency module. The radio frequency module is used in an FDD base station system, and includes the digital intermediate frequency unit in the embodiment shown in FIG. 4.

An embodiment of the present invention further provides an FDD base station system. The system includes the foregoing radio frequency module.

In the foregoing embodiments, the description of each embodiment has respective focuses. For a part that is not described in detail in an embodiment, reference may be made to related descriptions in other embodiments.

It should be noted that, for ease of description, the foregoing method embodiments are described as a series of action combinations. However, a person skilled in the art should understand that the present invention is not limited to the described sequence of the actions, because some steps may be performed in another sequence or performed at the same time according to the present invention. In addition, a person skilled in the art should also appreciate that all the embodiments described in the specification are exemplary embodiments, and the related actions and modules are not necessarily mandatory to the present invention.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

The PIM interference cancellation method and the related apparatus for a radio frequency module provided in the embodiments of the present invention are described in detail above. The principle and the implementation manner of the present invention are described herein through specific examples in the specification. The description about the embodiments is merely provided to help understand the method and core ideas of the present invention. In addition, a person of ordinary skill in the art can make modifications to the present invention in terms of the specific implementation manners and application scopes according to the ideas of the present invention. In conclusion, content of the specification shall not be construed as a limitation to the present invention. in detail above. The principle and the implementation manner of the present invention are described herein through specific examples in the specification. The description about the embodiments is merely provided to help understand the present invention. In addition, a person of ordinary skill in the art can make modifications to the present invention in terms of the specific implementation manners and application scopes. In conclusion, content of the specification shall not be construed as a limitation to the present invention.

## Claims

1. A digital intermediate frequency unit for a radio frequency module, comprising:

    an obtaining subunit (201), configured to obtain a digital transmit signal from a transmit channel of the radio frequency module;
    a calculation subunit (202), configured to perform non-linear transformation on the digital transmit signal to generate a cancellation signal y(k) to be used to cancel a passive inter-modulation, PIM, component; and
    a superimposition subunit (203), configured to superimpose the cancellation signal reversely on a receive channel of the radio frequency module to cancel a PIM component of a receive signal;
    wherein the calculation subunit (202) is specifically configured to generate a non-linear base of the digital transmit signal, resolve a non-linear term coefficient according to a current cancellation error, and generate the cancellation signal according to the digital transmit signal, the non-linear base, and the non-linear term coefficient, **characterized in that** the calculation subunit (202) is specifically configured to calculate, according to the following formulas, said cancellation signal y(k) that is used to cancel said a PIM component:

    $$y(k) = \sum CH_{n,p,q}(k) * x(k-p) * NL_n\big(\big|x(k-q)\big|\big);$$

    $$CH_{n,p,q}(k+1) = CH_{n,p,q}(k) + mu * (e \otimes LPF) * \big[conj(x(k-p)) * NL_n\big(\big|x(k-q)\big|\big) \otimes LPF\big];$$

    wherein x( ) denotes the digital transmit signal, y( ) denotes the cancellation signal, k denotes time, p and q denote two delays, n is used to identify different non-linear bases, $CH_{n,p,q}$( ) denotes the non-linear term coefficient, $NL_n$( ) is a function related to the transmit signal x( ), x(k-p)*$NL_n$(|x(k-q)|) denotes the non-linear base, x( ), y( ), $CH_{n,p,q}$( ), and $NL_n$( ) are all functions of the time k, mu denotes a step factor, LPF denotes a band-limited filter coefficient, $\otimes$ denotes convolution, and conj denotes conjugation.

2. The digital intermediate frequency unit according to claim 1, wherein:
    the superimposition subunit (203) is specifically configured to superimpose the cancellation signal y(k) reversely on the receive channel of the radio frequency module, so that a receive signal r(k) on the receive channel becomes e(k)=r(k)-y(k) after cancellation processing.

3. A radio frequency module, adapted to be used in a frequency division duplex, FDD, base station system, and comprising the digital intermediate frequency unit according to any one of claims 1 to 2.

4. A frequency division duplex, FDD, base station system, comprising the radio frequency module according to claim 3.

5. A passive inter-modulation, PIM, interference cancellation method for a radio frequency module, comprising:

    obtaining (110) a digital transmit signal from a transmit channel of the radio frequency module;
    performing (120) non-linear transformation on the digital transmit signal to generate a cancellation signal that is used to cancel a PIM component; and
superimposing (130) the cancellation signal reversely on a receive channel of the radio frequency module to cancel a PIM component of a receive signal;
wherein the performing (120) non-linear transformation on the digital transmit signal to generate a cancellation signal that is used to cancel a PIM component comprises:

generating a non-linear base of the digital transmit signal;
resolving a non-linear term coefficient according to a current cancellation error; and
generating the cancellation signal according to the digital transmit signal, the non-linear base, and the non-linear term coefficient; **characterized in that** the generating the cancellation signal according to the digital transmit signal, the non-linear base, and the non-linear term coefficient comprises:
calculating, according to the following formulas, a cancellation signal y(k) that is used to cancel a PIM component:

$$y(k) = \sum CH_{n,p,q}(k) * x(k-p) * NL_n\big(|x(k-q)|\big);$$

$$CH_{n,p,q}(k+1) = CH_{n,p,q}(k) + mu * (e \otimes LPF) * \big[conj(x(k-p)) * NL_n\big(|x(k-q)|\big) \otimes LPF\big];$$

wherein x( ) denotes the digital transmit signal, y( ) denotes the cancellation signal, k denotes time, p and q denote two delays, n is used to identify different non-linear bases, $CH_{n,p,q}$( ) denotes the non-linear term coefficient, $NL_n$( ) is a function related to the transmit signal x( ), x(k-p)*$NL_n$(|x(k-q)|) denotes the non-linear base, all x( ), y( ), $CH_{n,p,q}$( ), and $NL_n$( ) are functions of the time k, mu denotes a step factor, LPF denotes a band-limited filter coefficient, $\otimes$ denotes convolution, and conj denotes conjugation.

6. The method according to claim 5, wherein the superimposing (130) the cancellation signal reversely on a receive channel of the radio frequency module comprises:
superimposing the cancellation signal y(k) reversely on the receive channel of the radio frequency module, so that a receive signal r(k) on the receive channel becomes e(k) = r(k) - y(k) after cancellation processing.

**Patentansprüche**

1. Digitale Zwischenfrequenzeinheit für ein Hochfrequenzmodul, umfassend:

eine Erlangungs-Untereinheit (201), die zum Erlangen eines digitalen Sendesignals von einem Sendekanal des Hochfrequenzmoduls konfiguriert ist;
eine Berechnungs-Untereinheit (202), die zum Durchführen von nichtlinearer Transformation am digitalen Sendesignal konfiguriert ist, um ein Unterdrückungssignal y(k) zu erzeugen, das zum Unterdrücken einer passiven Intermodulations-,PIM-,Komponente verwendet werden soll; und
eine Überlagerungs-Untereinheit (203), die zum umgekehrten Überlagern des Unterdrückungssignals über einen Empfangskanal des Hochfrequenzmoduls konfiguriert ist, um eine PIM-Komponente eines Empfangssignals zu unterdrücken; wobei
die Berechnungs-Untereinheit (202) insbesondere zum Erzeugen einer nichtlinearen Basis des digitalen Sendesignals, Lösen eines nichtlinearen Termkoeffzienten gemäß einem aktuellen Unterdrückungsfehler und Erzeugen des Unterdrückungssignals gemäß dem digitalen Sendesignal, der nichtlinearen Basis und dem nichtlinearen Termkoeffzienten konfiguriert ist, **dadurch gekennzeichnet, dass** die Berechnungs-Untereinheit (202) insbesondere so konfiguriert ist, dass sie das Unterdrückungssignal y(k), das zum Unterdrücken der PIM-Komponente verwendet wird, gemäß den folgenden Formeln berechnet:

$$y(k) = \sum CH_{n,p,q}(k) * x(k-p) * NL_n(|x(k-q)|);$$

$$CH_{n,p,q}(k+1) = CH_{n,p,q}(k) + mu*(e \otimes LPF)*[conj(x(k-p))*NL_n(|x(k-q)|) \otimes LPF];$$

wobei x( ) das digitale Sendesignal bezeichnet, y( ) das Unterdrückungssignal bezeichnet, k Zeit bezeichnet, p und q zwei Verzögerungen bezeichnen, n zum Identifizieren von verschiedenen nichtlinearen Basen verwendet wird, $CH_{n,p,q}()$ den nichtlinearen Termkoeffzienten bezeichnet, $NL_n()$ eine Funktion ist, die mit dem Sendesignal $x()$ in Beziehung steht, $x(k - p)*NL_n(|x(k - q)|)$ die nichtlineare Basis bezeichnet, $x()$, $y()$, $CH_{n,p,q}()$ und $NL_n()$ allesamt Funktionen der Zeit k sind, mu einen Schrittfaktor bezeichnet, LPF einen bandbeschränkten Filterkoeffizienten bezeichnet, $\otimes$ Faltung bezeichnet, und conj Konjugation bezeichnet.

2. Digitale Zwischenfrequenzeinheit nach Anspruch 1, wobei:
die Überlagerungs-Untereinheit (203) insbesondere zum umgekehrten Überlagern des Unterdrückungssignals y(k) über den Empfangskanal des Hochfrequenzmoduls konfiguriert ist, so dass ein Empfangssignal r(k) auf dem Empfangskanal nach der Unterdrückungsverarbeitung e(k) = r(k) - y(k) wird.

3. Hochfrequenzmodul, das ausgelegt ist, um in einem Frequenzduplex-,FDD-,Basisstationssystem verwendet zu werden, und die digitale Zwischenfrequenzeinheit nach einem der Ansprüche 1 bis 2 umfasst.

4. Frequenzduplex-,FDD-,Basisstationssystem, umfassend das Hochfrequenzmodul nach Anspruch 3.

5. Verfahren zur Unterdrückung von passiver Intermodulations-,PIM-,Störung für ein Hochfrequenzmodul, umfassend:

Erlangen (110) eines digitalen Sendesignals von einem Sendekanal des Hochfrequenzmoduls;
Durchführen (120) von nichtlinearer Transformation am digitalen Sendesignal, um ein Unterdrückungssignal zu erzeugen, das zum Unterdrücken einer PIM-Komponente verwendet werden soll; und
umgekehrtes Überlagern (130) des Unterdrückungssignals über einen Empfangskanal des Hochfrequenzmoduls, um eine PIM-Komponente eines Empfangssignals zu unterdrücken;
wobei das Durchführen (120) von nichtlinearer Transformation am digitalen Sendesignal zum Erzeugen eines Unterdrückungssignals, das zum Unterdrücken einer passiven PIM-Komponente verwendet werden soll, umfasst:

Erzeugen einer nichtlinearen Basis des digitalen Sendesignals;
Lösen eines nichtlinearen Termkoeffzienten gemäß einem aktuellen Unterdrückungsfehler; und
Erzeugen des Unterdrückungssignals gemäß dem digitalen Sendesignal, der nichtlinearen Basis und dem nichtlinearen Termkoeffzienten; **dadurch gekennzeichnet, dass**:
das Erzeugen des Unterdrückungssignals gemäß dem digitalen Sendesignal, der nichtlinearen Basis und dem nichtlinearen Termkoeffzienten umfasst:
Berechnen eines Unterdrückungssignals y(k), das zum Unterdrücken einer PIM-Komponente verwendet werden soll, gemäß den folgenden Formeln:

$$y(k) = \sum CH_{n,p,q}(k)*x(k - p)*NL_n(|x(k - q)|);$$

$$CH_{n,p,q}(k + 1) = CH_{n,p,q}(k) + mu*(e \otimes LPF)*[conj(x(k - p))*NL_n(|x(k - q)|) \otimes LPF;$$

wobei x( ) das digitale Sendesignal bezeichnet, y( ) das Unterdrückungssignal bezeichnet, k Zeit bezeichnet, p und q zwei Verzögerungen bezeichnen, n zum Identifizieren von verschiedenen nichtlinearen Basen verwendet wird, $CH_{n,p,q}()$ den nichtlinearen Termkoeffzienten bezeichnet, $NL_n()$ eine Funktion ist, die mit dem Sendesignal $x()$ in Beziehung steht, $x(k - P)*NL_n(|x(k - q)|)$ die nichtlineare Basis bezeichnet, $x()$, $y()$, $CH_{n,p,q}()$ und $NL_n()$ allesamt Funktionen der Zeit k sind, mu einen Schrittfaktor bezeichnet, LPF einen bandbeschränkten Filterkoeffizienten bezeichnet, $\otimes$ Faltung bezeichnet, und conj Konjugation bezeichnet.

6. Verfahren nach Anspruch 5, wobei das umgekehrte Überlagern (130) des Unterdrückungssignals über einen Empfangskanal des Hochfrequenzmoduls umfasst:
umgekehrtes Überlagern des Unterdrückungssignals y(k) über den Empfangskanal des Hochfrequenzmoduls, so dass ein Empfangssignal r(k) auf dem Empfangskanal nach der Unterdrückungsverarbeitung e(k) = r(k) - y(k) wird.

**Revendications**

1. Unité numérique à fréquence intermédiaire pour module à radiofréquence, comportant :

une sous-unité (201) d'obtention, configurée pour obtenir un signal numérique d'émission à partir d'un canal d'émission du module à radiofréquence ;

une sous-unité (202) de calcul, configurée pour réaliser une transformation non linéaire sur le signal numérique d'émission afin de générer un signal d'annulation y(k) à utiliser pour annuler une composante d'intermodulation passive, PIM ; et

une sous-unité (203) de superposition, configurée pour superposer avec inversion le signal d'annulation sur un canal de réception du module à radiofréquence pour annuler une composante de PIM d'un signal de réception ;

la sous-unité (202) de calcul étant spécifiquement configurée pour générer une base non linéaire du signal numérique d'émission, résoudre un coefficient de terme non linéaire en fonction d'une erreur d'annulation actuelle, et générer le signal d'annulation selon le signal numérique d'émission, la base non linéaire, et le coefficient de terme non linéaire, **caractérisée en ce que** la sous-unité (202) de calcul est spécifiquement configurée pour calculer, selon les formules suivantes, ledit signal d'annulation y(k) qui est utilisé pour annuler ladite composante de PIM :

$$y(k) = \Sigma \ CH_{n,p,q}(k) * x(k-p) * NL_n(|x(k-q)|) \ ;$$

$$CH_{n,p,q}(k+1) = CH_{n,p,q}(k) + mu * (e \otimes LPF) * [conj(x(k-p)) * NL_n(|x(k-q)|) \otimes LPF] \ ;$$

où x() dénote le signal numérique d'émission, y() dénote le signal d'annulation, k dénote le temps, p et q dénotent deux retards, n est utilisé pour identifier différentes bases non linéaires, $CH_{n,p,q}()$ dénote le coefficient de terme non linéaire, $NL_n()$ est une fonction liée au signal d'émission x(), $x(k-p) * NL_n(|x(k-q)|)$ dénote la base non linéaire, x(), y(), $CH_{n,p,q}()$, et $NL_n()$ sont tous des fonctions du temps k, mu dénote un facteur de pas, LPF dénote un coefficient de filtre limité par une bande, $\otimes$ dénote la convolution, et conj dénote la conjugaison.

2.  Unité numérique à fréquence intermédiaire selon la revendication 1 :
    la sous-unité (203) de superposition étant spécifiquement configurée pour superposer avec inversion le signal d'annulation y(k) sur le canal de réception du module à radiofréquence, de telle façon qu'un signal de réception r(k) sur le canal de réception devienne e(k) = r(k) - y(k) après le traitement d'annulation.

3.  Module à radiofréquence, prévu pour être utilisé dans un système de station de base en duplex par répartition en fréquence, FDD, et comportant l'unité numérique à fréquence intermédiaire selon l'une quelconque des revendications 1 à 2.

4.  Système de station de base en duplex par répartition en fréquence, FDD, comportant le module à radiofréquence selon la revendication 3.

5.  Procédé d'annulation de brouillage d'intermodulation passive, PIM, pour un module à radiofréquence, comportant les étapes consistant à :

    obtenir (110) un signal numérique d'émission à partir d'un canal d'émission du module à radiofréquence ;

    réaliser (120) une transformation non linéaire sur le signal numérique d'émission afin de générer un signal d'annulation qui est utilisé pour annuler une composante de PIM ; et

    superposer avec inversion (130) le signal d'annulation sur un canal de réception du module à radiofréquence pour annuler une composante de PIM d'un signal de réception ;

    la réalisation (120) d'une transformation non linéaire sur le signal numérique d'émission pour générer un signal d'annulation qui est utilisé pour annuler une composante de PIM comportant les étapes consistant à :

        générer une base non linéaire du signal numérique d'émission ;

        résoudre un coefficient de terme non linéaire en fonction d'une erreur d'annulation actuelle ; et

        générer le signal d'annulation selon le signal numérique d'émission, la base non linéaire, et le coefficient de terme non linéaire ;

        **caractérisé en ce que** la génération du signal d'annulation selon le signal numérique d'émission, la base non linéaire, et le coefficient de terme non linéaire comporte :

        le calcul, selon les formules suivantes, d'un signal d'annulation y(k) qui est utilisé pour annuler une composante de PIM :

$$y(k) = \Sigma\ CH_{n,p,q}(k)^*x(k\text{-}p)^*NL_n(|x(k\text{-}q)|)\ ;$$

$$CH_{n,p,q}(k+1)= CH_{n,p,q}(k)+mu^*(e{\otimes}LPF)^*[conj(x(k\text{-}p))^*\ NL_n(|x(k\text{-}q)|)\ {\otimes}LPF]\ ;$$

où x() dénote le signal numérique d'émission, y() dénote le signal d'annulation, k dénote le temps, p et q dénotent deux retards, n est utilisé pour identifier différentes bases non linéaires, $CH_{n,p,q}()$ dénote le coefficient de terme non linéaire, $NL_n()$ est une fonction liée au signal d'émission x(), $x(k\text{-}p)^*NL_n(|x(k\text{-}q)|)$ dénote la base non linéaire, x(), y(), $CH_{n,p,q}()$, et $NL_n()$ sont tous des fonctions du temps k, mu dénote un facteur de pas, LPF dénote un coefficient de filtre limité par une bande, ⊗ dénote la convolution, et conj dénote la conjugaison.

6. Procédé selon la revendication 5, la superposition (130) avec inversion du signal d'annulation sur un canal de réception du module à radiofréquence comportant :
la superposition avec inversion du signal d'annulation y(k) sur le canal de réception du module à radiofréquence, de telle façon qu'un signal de réception r(k) sur le canal de réception devienne e(k) = r(k) - y(k) après le traitement d'annulation.

FIG. 1

Transmitter

Mixer

Digital intermediate frequency unit

PA

DAC

DAC

TX_LO

TX

| DUC | SRC |
| DUC | SRC |
| DUC | SRC |
| DUC | SRC |

TX_DUP

Receiver

Mixer

RX_DUP

LNA

SAW

RX_LO

IF filter

ADC

DDC

RX

| DDC | SRC |
| DDC | SRC |
| DDC | SRC |
| DDC | SRC |

EP 3 176 951 B1

| Obtain a digital transmit signal from a transmit channel of a radio frequency module | 110 |

| Perform non-linear transformation on the digital transmit signal to generate a cancellation signal that is used to cancel a PIM component | 120 |

| Superimpose the cancellation signal reversely on a receive channel of the radio frequency module to cancel a PIM component of a receive signal | 130 |

FIG. 2

FIG. 3

FIG. 4

FIG. 5

FIG. 6

BPF    Band Pass Filter, bandpass filter      d (Delay, delay)

EP 3 176 951 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014078455 A1

- US 2014036736 A1